Europäisches Patentamt

(19) European Patent Office

Office européen des brevets

(11) Publication number: **0 309 904 B1**

(12) **EUROPEAN PATENT SPECIFICATION**

(45) Date of publication of patent specification:
29.05.91 Bulletin 91/22

(51) Int. Cl.⁵: **C08L 21/00, C08L 63/00**

(21) Application number: **88115552.7**

(22) Date of filing: **22.09.88**

(54) **Epoxide and rubber based curable compositions.**

(30) Priority: **28.09.87 US 101699**

(43) Date of publication of application:
**05.04.89 Bulletin 89/14**

(45) Publication of the grant of the patent:
**29.05.91 Bulletin 91/22**

(84) Designated Contracting States:
**DE ES FR GB IT SE**

(56) References cited:
**DE-B- 1 216 533**
**US-A- 2 399 949**

(73) Proprietor: **PPG INDUSTRIES, INC.**
**One PPG Place**
**Pittsburgh Pennsylvania 15272 (US)**

(72) Inventor: **Chasser, Anthony Michael**
**2810 Sullivan Drive**
**Glenshaw, Pa. 15116 (US)**
Inventor: **Makhlouf, Joseph Michael**
**1024 Norton Drive**
**Mars, Pa. 16046 (US)**

(74) Representative: **Sternagel, Hans-Günther, Dr. et al**
**Patentanwälte Dr. Michael Hann Dr. H.-G. Sternagel Sander Aue 30**
**W-5060 Bergisch Gladbach 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to curable compositions suitable for use as sealants.

DE-B-12 16 533 refers to a process for vulcanizing mixtures of natural or synthetic rubber with white fillers. The composition comprises rubbers having no functional groups in the molecule, epoxide resins containing at least two oxirane rings, white fillers such as silica, aluminium oxide or silicates and a common vulcanization system containing a sulfur, a disulfide, and a zinc compound. The epoxide is crosslinked either by the rubber or by known crosslinking agents for epoxide resins.

US-A-2,399,949 describes the vulcanization of butadiene styrene rubber by a vulcanization system comprising dithiocarbamates and thiuram sulfides as sulfur vulcanization accelerators.

In the manufacture of automobiles, sealants are used for a variety of different purposes. For certain applications it is desirable that the sealant have good adhesion to primed metal, be capable of curing at low temperatures of about 121°C (250°F) and in addition exhibit good physical properties such as resiliency and chip resistance.

Heretofore, polyvinyl chloride plastisol based sealants have been used. However, at cure temperatures of about 121°C (250°F), the plastisol compositions do not achieve their maximum potential in physical properties. Typically, these compositions have been deficient in resiliency, adhesive strength and tear strength.

There is a need, therefore, for a curable composition which is capable of good adhesion to primed metal, is capable of curing at low temperatures and which provides the requisite physical properties.

This object is attained by a curable composition comprising (a) a non-functional polydiene, (b) a polyepoxide, and (c) a sulfur, a disulfide and zinc containing vulcanization system to cure the polydiene and the polyepoxide, characterized in that the composition is a one package, stable composition wherein the vulcanization system contains a zinc $C_1$-$C_{10}$-alkyl dithiocarbamate.

The curable composition of the present invention comprises as one of its principal constituents a polydiene.

The polydiene polymers include polymers of 1,3-dienes containing from 4 to 12 and preferably from 4 to 6 carbon atoms. Typical dienes include 1,3-butadiene which is preferred, 2,3-dimethyl-1,3-butadiene, isoprene, chloroprene and piperylene. Also, copolymers of 1,3-butadiene and a monomer copolymerizable with 1,3-butadiene such as isoprene, acrylonitrile, and piperylene can be used. Preferably the composition additionally comprises an acrylonitrile butadiene copolymer.

Other polymerizable monomers such as methyl methacrylate, and styrene can also be used. Preferably the polydiene polymer is a mixture of 1,4-polybutadiene and a 1,4-polybutadiene-acrylonitrile copolymer.

If desired, a variety of vulcanizable or non-vulcanizable synthetic rubbers can be used in conjunction with the polydiene. Examples of such synthetic rubbers include butyl rubber, ethylene propolyene terpolymer, silicone rubbers, polysulfides, polyacrylate rubbers and chlorinated polyethylene rubbers. Copolymers of many of the aforelisted synthetic rubbers with styrene can also be utilized.

It should be understood that the polydiene polymer of the present invention is non-functional. That is, it does not contain functional groups such as, for example, hydroxyl, amino, carboxyl or mercapto. The preferred non-functional diene is 1,4 polybutadiene.

Another principal constituent of the claimed curable compositions is a polyepoxide.

The polyepoxides are those materials having a 1,2 epoxide group present in the molecule. Hydroxyl groups may also be present and often are. A polyepoxide for the purposes of the present invention contains at least two 1,2-epoxy groups per molecule. In general, the epoxide equivalent weight can range from 289 to 4,000. These polyepoxides are saturated or unsaturated, cyclic or acyclic, aliphatic, alicyclic, aromatic or heterocyclic. They can contain substituents such as halogen, hydroxyl and ether groups.

One useful class of polyepoxides comprises the epoxy polyethers obtained by reacting an epihalohydrin (such as epichlorohydrin or epibromohydrin) with a polyphenol in the presence of an alkali. Suitable polyphenols include resorcinol, catechol, hydroquinone, bis(4-hydroxy- phenyl)-2,2-propane, i.e., bisphenol A ; bis(4-hydroxyphenyl)-1,1-isobutane ; 4,4-dihydroxybenzophenone ; bis(4-hydroxyphenyl)-1,1- ethane ; bis(2-hydroxynaphenyl)-methane ; and 1,5-hydroxynaphthalene. One very common polyepoxide is a polyglycidyl ether of a polyphenol, such as bisphenol A. More preferably the polyepoxide is a diglycidyl ether of bishphenol A.

Another class of polyepoxides are thepolyglycidyl ethers of polyhydric alcohols. These compounds may be derived from such polyhydric alcohols as ethylene glycol, diethylene glycol, triethylene glycol, 1,2-propylene glycol, 1,4-butylene glycol, triethylene glycol, 1,2-propylene glycol, 1,4-butylene glycol, 1,5-pentanediol, 1,2,6-hexanetriol, glycerol, trimethylolpropane, and bis(4-hydroxycyclo- hexyl-2,2-propane.

Another class of polyepoxides are the polyglycidyl esters of polycarboxylic acids. These compounds are produced by the reaction of epichlorohydrin or a similar epoxy compound with an aliphatic or aromatic polycarboxylic acid such as oxalic acid, succinic acid, glutaric acid, terephthalic acid, 2,6-naphthalene dicarboxylic acid and dimerized linoleic acid.

Still another class of polyepoxides are derived from the epoxidation of an olefinically unsaturated alicyclic compound. These polyepoxides are non-phenolic and are obtained by epoxidation of alicyclic olefins, for example, by oxygen and selected metal catalysts, by perbenzoic acid, by acid-aldehyde monoperacetate or by peracetic acid. Among such polyepoxides are the epoxy alicyclic ethers and esters well known in the art.

Useful polyepoxides also include those containing oxyalkylene groups in the epoxy molecule. Another class of polyepoxides consists of the epoxy novalac resins. These resins are obtained by reacting an epihalohydrin with the condensation product of aldehyde and monohydric or epichlorohydrin with a phenol formaldehyde condensate.

Another group of epoxide containing materials includes acrylic copolymers containing copolymerized glycidyl acrylate or methacrylate units. These acrylic copolymers can be prepared by the reaction of alkyl esters of alpha, beta unsaturated mono- or dicarboxylic acid with either alycidyl acrylate or methacrylate. Other glycidyl containing copolymerizable monomers such as diglycidyl itaconate and diglycidyl maleate also can be used. These monomers can be optionally copolymerized in the presence of other copolymerizable monomers such as vinyl aromatic compounds, such as styrene or vinyl toluene, and also acrylonitrile or methacrylonitrile.

Preferably the polyepoxide is a diepoxide. Preferably a polyglycidyl ether of bisphenol A is used, more preferably a diglycidyl ether. Examples of suitable materials are the EPON® epoxy resins which are commercially available from Shell Chemical, such as EPON® 828.

It should be understood that mixtures of the aforedescribed polyepoxides can be used herin.

A further principle constituent of the claimed curable compositions is a sulfur and zinc containing vulcanization system which is adapted to cure the polydiene and the polyepoxide components.

As used in this specification, vulcanization is the physicochemical change resulting from crosslinking of the polydiene with sulfur, generally with application of heat. The precise mechanism which produces the network structure during the cure of the claimed compositions is still not completely known. However, it is theorized that a physical incorporation of the epoxide into the polydiene rubber lattice may be in effect. The vulcanization system comprises a material or mixture of materials which is adapted to effect cure of the polydiene and the polyepoxide. The vulcanization system comprises a $C_1$-$C_{10}$-alkyl dithiocarbamate and a disulfide. A number of lower alkyl dithiocarbamates are useful herein, particularly those having from 1 to 10, preferably 1 to 5 carbon atoms in the alkyl portion. Examples of suitable dithiocarbamates include methyl, ethyl, propyl, butyl and amyl dithiocarbamate. Preferably the dimethyl dithiocarbamate is utilized herein. These materials are commercially available in association with zinc in salt form, namely zinc dibutyl dithiocarbamate, zinc dimethyl dithiocarbamate, zinc diethyl dithiocarbamate and zinc diamyl dithiocarbamate. These materials can be commercially obtained from Vanderbilt Chemical Company under the trade designation ZIMATE®.

The zinc which is part of the vulcanization system is introduced associated with the $C_1$-$C_{10}$-alkyl dithiocarbamate in salt form. Additional zinc can also be introduced as zinc oxide. It should be understood that a variety of grades of zinc oxide are available and can be utilized for this purpose. The amount of zinc in the vulcanization system can vary widely, generally from 0.1 percent by weight to 10 percent by weight based on the total weight of the curable composition. The precise mechanism is not understood ; however, it is believed that zinc functions as an accelerator for the sulfur vulcanization.

The disulfide component of the vulcanization system can also be selected from a variety of materials. Examples of suitable disulfides include 4-morpholinyl-2-benzothiazole disulfide ; 4,4'-dithiobismorpholine and benzothiazyl disulfide. Preferably the disulfide is benzothiazyl disulfide. It is believed that the dithiocarbamate and the disulfide components of the vulcanization system function as primary and secondary accelerators, respectively, for the vulcanization reaction. Moreover, in preferred embodiments of the present invention it is believed that the disulfide species functions as a retarder for premature vulcanization. It is believed that the thiocarbamate operates in conjunction with the sulfur in order to effect the crosslinked, cured system. It is also believed that the dithiocarbamate functions not only to assist in vulcanization of the rubber component of the composition but in addition functions to incorporate the epoxide component into the crosslinked network. As has been mentioned above, the precise mechanism for this is not understood.

In preferred embodiments of the present invention, the claimed curable composition is essentially free of amino group containing materials. The presence of amine is not preferred because it detracts from the resiliency of the resultant cured composition.

The amounts of each of the constituents of the claimed curable composition can vary widely depending upon the particular properties desired in the curable composition. For example, by varying the amount of polyepoxide and dithiocarbamate which is utilized in the curable composition, one can tailor the hardness of the ultimate cured composition. The more polyepoxide and dithiocarbamate which is utilized, the harder and stronger the polydiene polyepoxide cured material becomes. Moreover, it is believed that the polyepoxide functions to promote adhesion of the curable composition to primed metal (that is, metal which has been coated with a suitable primer coating composition). Generally, the amount of polydiene which is utilized in the claimed curable composition can vary within the range of from 10 percent by weight to 80 percent by weight. Preferably, the amount of polydiene which is utilized varies from 20 percent by weight to 50 percent by weight, and more preferably from 25 percent by weight to 40 percent by weight. The amount of polyepoxide generally can vary within the range of from 4 percent by weight to 35 percent by weight, preferably from 4 percent by weight to 25 percent by weight, and more preferably from 10 percent by weight to 20 percent by weight, the percentages based on the total weight of the curable composition. The sulfur and zinc containing vulcanization system is utilized in amounts varying from 1 to 35 percent by weight based on the total weight of the curable composition.

In preferred embodiments the dithiocarbamate primary accelerator can be present in an amount ranging from 1 percent by weight to 10 percent by weight, preferably from 3 percent by weight to 7 percent by weight. The disulfide secondary accelerator can be present in an amount ranging from 0.2 percent by weight to 5 percent by weight, preferably from 1 percent by weight to 2 percent by weight. All the percentages are based on the total weight of the curable composition.

The amount of sulfur which is part of the vulcanization system can also vary widely. Generally the amount of sulfur varies from 0.5 percent by weight to 15 percent by weight, preferably from 1 percent by weight to 10 percent by weight and more preferably from 2 percent by weight to 7 percent by weight, the percentages based on the total weight of the curable composition. The sulfur can be utilized in a variety of forms but typically it is elemental sulfur and it is used as a solid oil-treated powder. For example, suitable sources of sulfur for the vulcanization system are the CRYSTEX® brand sulfurs which are commercially available from the Stauffer Chemical Company.

It should be understood that the accelerator materials discussed above can contribute a minor amount of the required sulfur in the vulcanization system.

The composition can be used as one package, stable curable composition and which can comprise a variety of other optional additives in addition to the principle constituents which have been detailed above. Examples of additives include fillers such as calcium carbonate, stearic acid treated calcium carbonate, polybutadiene treated calcium carbonate, barium sulfate, calcium and magnesium oxide, carbon blacks, hydrocarbon tackifiers and various phthalate and adipate plasticizers and antioxidants. Examples of suitable antioxidants are butylated hydroxytoluene, butylated and styrenated phenols and cresols, alkylated quinones and hydroquinones and butylated hydroxy benzyl isocyanates.

It should be noted that a variety of types of carbon black are available which differ primarily in particle size and surface area. Carbon black is typically utilized as a reinforcing filler to improve the tear resistance of the cured composition. For optimum tear resistance, carbon black having a small particle size is preferred.

The claimed curable compositions have a wide latitude of cure temperatures. The claimed curable compositions can be cured by baking at a temperature whithin the range of from 104°C to 163°C (220°F to 325°F) for a period of time ranging from 10 minutes to 60 minutes. Preferably, the claimed curable compositions are cured by baking within a temperature of from 116°C to 127°C (240°F to 260°F) for a period of time ranging from 15 minutes to 30 minutes. One advantage of the claimed curable compositions is their ability to cure at low temperatures and in addition tolerate a high temperature overbake while achieving comparable physical properties at both extremes. This capability reduces problems associated with underbaking and overbaking and permits the tailoring of compositions to suit a variety of application conditions.

In addition the stable curable compositions have outstanding adhesion to a variety of primed metals. Moreover, the claimed curable compositions exhibit excellent chip resistance and therefore are particularly suitable as underbody sealers for automobiles. This excellent chip resistance is exhibited not only at ambient temperature but also at very low temperatures, i.e., subzero temperatures.

The claimed curable compositions can be applied by conventional means although typically they are spray applied.

The claimed stable curable compositions also demonstrate a wide variety of other advantageous properties such as solvent resistance, moisture resistance, heat resistance, resiliency, and good overall strength at ambient temperature. The claimed curable compositions also exhibit good cohesive failure. Moreover, they have excellent package stability for prolonged periods of up to three months.

The following examples are intended to be illustrative of the invention and are not intended to be limiting.

EXAMPLES 1 to 5

This example illustrates the preparation and evaluation of some curable compositions according to the present invention. Example 1 is a preferred composition according to the invention. Examples 2 and 3 show the effect on chip resistance of varying the amount of epoxide and dithiocarbamate, respectively. Examples 4 and 5 demonstrate the effect of eliminating the epoxide and dithiocarbamate, respectively.

## Compositions

| Ingredients | Parts by Weight (grams) | | | | |
|---|---|---|---|---|---|
| | 1 | 2 | 3 | 4 | 5 |
| POLIOL® 130[1] | 15.93 | 15.93 | 15.93 | 15.93 | 15.93 |
| HYCAR® 1312 LV[2] | 16.90 | 16.90 | 16.90 | 16.90 | 16.90 |
| calcium carbonate | 21.74 | 21.74 | 21.74 | 21.74 | 21.74 |
| MULTIFLEX® SC[3] | 1.88 | 1.88 | 1.88 | 1.88 | 1.88 |
| EPON® 828[4] | 15.68 | 10.45 | 15.68 | 0.00 | 15.68 |
| methyl zimate[5] | 5.22 | 5.22 | 1.30 | 1.30 | 0.00 |
| sulfur[6] | 3.81 | 3.81 | 3.81 | 3.81 | 3.81 |
| carbon black[7] | 1.41 | 1.41 | 1.41 | 1.41 | 1.41 |
| FLEXOL®[8] | 1.00 | 1.00 | 1.00 | 1.00 | 1.00 |
| butylated hydroxy toluene | 0.60 | 0.60 | 0.60 | 0.60 | 0.60 |
| plasticizer[9] | 1.60 | 1.60 | 1.60 | 1.60 | 1.60 |
| IDMA/STEREON 840A[10] | 1.00 | 1.00 | 1.00 | 1.00 | 1.00 |
| VULKACIT® DM/C[11] | 1.00 | 1.00 | 1.00 | 1.00 | 1.00 |

(1) This unsaturated resin is the polymerization product of 1,3-butadiene which is commercially available from Hüls. The molecular weight is approximately 3,000.

(2) This unsaturated resin is a butadiene acrylonitrile copolymer which is commercially available from B. F. Goodrich.

(3) This is stearic acid treated calcium carbonate which is commercially available from Pfizer.

(4) This epoxy resin is the diglycidyl ether of bisphenol A which is commercially available from Shell Chemical Company.

(5) This is zinc dimethyldithiocarbamate which is commercially available from R.T. Vanderbilt Chemical Company.

(6) This is CRYSTEX® OT-90 from Stauffer Chemical wich is an oil treated powder having a 90 percent sulfur content.

(7) This carbon black is commercially available from the Sid Richardson Company under the code FWRC 1504. This carbon black has a particle size of 41 μm.

(8) This is epoxidized soybean oil which is commercially available from Union Carbide.

(9) This is dioctylphthalate

(10) This is a dissolution product of 30 percent by weight STEREON® 840 A which is a styrene-butadiene copolymer available from Firestone, in 70 percent isodecyl methacrylate. It was used as a flow additive.

(11) Benzothiazyl disulfide commercially available from Mobay Chemical Company.

The sealant compositions were prepared by combining the ingredients with agitation. The compositions were evaluated for physical properties as is detailed below. Lap Shear Strength : Lap shear bonds for testing were prepared using two strips of metal 2.54 cm × 10.16 cm × 0.08 cm (1 inch × 4 inches × 0.032 inch) which had been primed with a cathodically electrodepositable primer coating composition commercially available from PPG Industries, Inc. as UNI-PRIME®. A 1.25 milimeter (50 mil) thick film of a composition was applied to a metal strip and then a second metal strip was placed overtop so that only a 3.16 cm² (one-half square inch) strip overlapped. The composition was cured by backing the panels for 30 minutes at 121°C (250°F). The lap shear strength of the bond in newtons per square milimeter (pounds per square inch (psi)) was determined according to ASTM D-1002-65. (The ends of the strips were pulled with an INSTRON® tester and the lap shear strength of the bond measured.) Chip Resistance : Each composition was sprayed onto a metal panel which had been primed with UNI-PRIME® cathodically electrodepositable primer and cured by baking at 121°C (250°F) for 30 minutes. The panels were then cooled overnight at −29°C (−20°F). The chip resistance was evaluated according to ASTM-D 3170 after the panels were subjected to the impact of 10 pints of standard road gravel projected at 0.56 newtons/mm² (80 psi).

A rating of 10 was excellent while 0 failed. <u>Shore A Hardness</u> : A 0.254 cm (0.100 inch), thick layer of a composition was applied onto a metal panel. The composition was cured by baking at 190°C for 30 minutes and then cooled to room temperature. The Shore A hardness was determined according to ASTM D 676 using a Shore Durometer Hardness Type A-2 instrument.

| Example | Shore A Hardness | Lap Shear Strength (psi) | Strength newtons/mm² | Chip Resistance |
|---------|------------------|--------------------------|----------------------|-----------------|
| 1 | 80 | ( 250) | 1.72 | 10 (excellent) |
| 2 | 60 | (130 ) | 0.89 | 8 (good) |
| 3 | 20 | ( 35 ) | 0.24 | 3 (poor) |
| 4 | 10 | ( 10 ) | 0.07 | 0 (fail) |
| 5 | Did not cure. | | | |

## Claims

### Claims for the contracting states DE, FR, GB, IT, SE

1. A curable composition comprising
(a) a non-functional polydiene,
(b) a polyepoxide, and
(c) a sulfur, a disulfide and zinc containing vulcanization system to cure the polydiene and the polyepoxide, **characterized in that** the composition is a one package, stable composition wherein the vulcanization system contains a zinc $C_1$-$C_{10}$-alkyl dithiocarbamate.

2. The curable composition of claim 1 wherein the polydiene is present in an amount ranging from 10 percent by weight to 80 percent by weight ; the polyepoxide is present in an amount ranging from 4 percent by weight to 35 percent by weight ; and the sulfur containing vulcanization system is present in an amount ranging from 1 to 35 percent by weight ; the percentages based on the total weight of the composition.

3. The curable composition of claim 1 wherein the zinc $C_1$-$C_{10}$-alkyl dithiocarbamate is zinc dimethyl dithiocarbamate.

4. The curable composition of claim 1 wherein the disulfide is benzothiazyl disulfide.

5. The curable composition of claim 2 wherein the dithiocarbamate is present in an amount from 1 to 10 percent by weight and the disulfide is present in an amount from 0.2 to 5 percent by weight ; the percentages based on the total weight of the composition.

6. The curable composition of claim 1 wherein the curable composition is essentially free of amino group containing material.

7. The curable composition of claim 1 additionally comprising an acrylonitrile butadiene copolymer.

8. The curable composition of claim 1 wherein the non-functional polydiene is 1,4-polybutadiene.

9. The curable composition of claim 1 wherein the polyepoxide is the diglycidyl ether of bisphenol A.

10. A method of coating a primed metal substrate by applying to said metal substrate the one package curable composition according to each of the claims 1 to 9 and at least partially curing the curable composition.

11. Use of the one package curable composition according to each of the claims 1 to 9 as sealants.

### Claims for the contracting state : ES

1. A method of preparing a curable composition by combining a mixture comprising
(a) a non-functional polydiene,
(b) a polyepoxide, and
(c) a sulfur, a disulfide and zinc containing vulcanization system to cure the polydiene and the polyepoxide, **characterized in that** the composition is a one package, stable composition wherein the vulcanization system contains a zinc $C_1$-$C_{10}$-alkyl dithiocarbamate.

2. The method of preparing a curable composition according to claim 1 wherein the polydiene is present

6

in an amount ranging from 10 percent by weight to 80 percent by weight ; the polyepoxide is present in an amount ranging from 4 percent by weight to 35 percent by weight ; and the sulfur containing vulcanization system is present in an amount ranging from 1 to 35 percent by weight ; the percentages based on the total weight of the composition.

3. The method of preparing a curable composition according to claim 1 wherein the zinc $C_1$-$C_{10}$-alkyl dithiocarbamate is zinc dimethyl dithiocarbamate.

4. The method of preparing a curable composition according to claim 1 wherein the disulfide is benzothiazyl disulfide.

5. The method of preparing a curable composition according to claim 2 wherein the dithiocarbamate is present in an amount from 1 to 10 percent by weight and the disulfide is present in an amount from 0.2 to 5 percent by weight ; the percentages based on the total weight of the composition.

6. The method of preparing a curable composition according to claim 1 wherein the curable composition is essentially free of amino group containing material.

7. The method of preparing a curable composition according to claim 1 additionally comprising an acrylonitrile butadiene copolymer.

8. The method of preparing a curable composition according to claim 1 wherein the non-functional polydiene is 1,4-polybutadiene.

9. The method of preparing a curable composition according to claim 1 wherein the polyepoxide is the diglycidyl ether of bisphenol A.

10. A method of coating a primed metal substrate by applying to said metal substrate the one package curable composition prepared according to each of the claims 1 to 9 and at least partially curing the curable composition.

11. Use of the one package curable composition prepared according to each of the claims 1 to 9 as sealants.


## Ansprüche

### Patentansprüche für die Vertragsstaaten DE, FR, GB, IT, SE

1. Härtbare Zusammensetzung, enthaltend
(a) ein nicht funktionelles Polydien,
(b) ein Polyepoxid und
(c) ein Schwefel, Disulfid und Zink enthaltendes Vulkanisiersystem, um das Polydien und das Polyepoxid zu härten, **dadurch gekennzeichnet**, daß die Zusammensetzung eine stabile Einpackungszusammensetzung ist, in der das Vulkanisiersystem Zink-$C_1$-$C_{10}$-alkyldithiocarbamat enthält.

2. Härtbare Zusammensetzung nach Anspruch 1, **dadurch gekennzeichnet**, daß das Polydien in einer Menge im Bereich von 10 Gew.-% bis 80 Gew.-% vorhanden ist, daß das Polyepoxid in einer Menge im Bereich von 4 Gew.-% bis 35 Gew.-% vorhanden ist und das Schwefel enthaltende Vulkanisiersystem in einer Menge im Bereich von 1 bis 35 Gew.-% vorhanden ist, wobei sich die Prozentangaben auf Gesamtgewicht der Zusammensetzung beziehen.

3. Härtbare Zusammensetzung nach Anspruch 1, **dadurch gekennzeichnet**, daß das Zink-$C_1$-$C_{10}$-alkyldithiocarbamat Zinkdimethyldithiocarbamat is.

4. Härtbare Zusammensetzung nach Anspruch 1, **dadurch gekennzeichnet**, daß das Disulfid Benzothiazyldisulfid ist.

5. Härtbare Zusammensetzung nach Anspruch 2, **dadurch gekennzeichnet**, daß das Dithiocarbamat in einer Menge von 1 bis 10 Gew.-% vorhanden ist und das Disulfid in einer Menge von 0,2 bis 5 Gew.-% vorhanden ist, wobei sich die Prozentangaben auf Gesamtgewicht der Zusammensetzung beziehen.

6. Härtbare Zusammensetzung nach Anspruch 1, **dadurch gekennzeichnet**, daß die härtbare Zusammensetzung im wesentlichen frei von Aminogruppen enthaltendem Material ist.

7. Härtbare Zusammensetzung nach Anspruch 1, **dadurch gekennzeichnet**, daß sie zusätzlich ein Acrylnitril-Butadiencopolymer enthält.

8. Härtbare Zusammensetzung nach Anspruch 1, **dadurch gekennzeichnet**, daß das nicht funktionelle Polydien 1,4-Polybutadien ist.

9. Härtbare Zusammensetzung nach Anspruch 1, **dadurch gekennzeichnet**, daß das Polyepoxid der Diglycidylether von Bisphenol A ist.

10. Verfahren zum Beschichten eines mit einem Primer versehenen Metallträgers durch Aufbringen der härtbaren Einpackungszusammensetzung nach jedem der Ansprüche 1 bis 9 auf den Metallträger und mindestens teilweises Härten der härtbaren Zusammensetzung.

7

11. Verwendung der härtbaren Einpackungszusammensetzung nach jedem der Ansprüche 1 bis 9 als Dichtungsmasse.

## Patentansprüche für den Vertragsstaat ES

1. Verfahren zum Herstellen einer härtbaren Zusammensetzung durch Zusammenstellen einer Mischung, enthaltend

(a) ein nicht funktionelles Polydien,

(b) ein Polyepoxid und

(c) ein Schwefel, Disulfid und Zink enthaltendes Vulkanisiersystem, um das Polydien und das Polyepoxid zu härten, **dadurch gekennzeichnet**, daß die Zusammensetzung eine stabile Einpackungszusammensetzung ist, in der das Vulkanisiersystem Zink-$C_1$-$C_{10}$-alkyldithiocarbamat enthält.

2. Verfahren zum Herstellen einer härtbaren Zusammensetzung nach Anspruch 1, **dadurch gekennzeichnet**, daß das Polydien in einer Menge im Bereich von 10 Gew.-% bis 80 Gew.-% vorhanden ist, daß das Polyepoxid in einer Menge im Bereich von 4 Gew.-% bis 35 Gew.-% vorhanden ist und das Schwefel enthaltende Vulkanisiersystem in einer Menge im Bereich von 1 bis 35 Gew.-% vorhanden ist, wobei sich die Prozentangaben auf Gesamtgewicht der Zusammensetzung beziehen.

3. Verfahren zum Herstellen einer härtbaren Zusammensetzung nach Anspruch 1, **dadurch gekennzeichnet**, daß das Zink-$C_1$-$C_{10}$-alkyldithiocarbamat Zinkdimethyldithiocarbamat ist.

4. Verfahren zum Herstellen einer härtbaren Zusammensetzung nach Anspruch 1, **dadurch gekennzeichnet**, daß das Disulfid Benzothiazyldisulfid ist.

5. Verfahren zum Herstellen einer härtbaren Zusammensetzung nach Anspruch 2, **dadurch gekennzeichnet**, daß das Dithiocarbamat in einer Menge von 1 bis 10 Gew.-% vorhanden ist und das Disulfid in einer Menge von 0,2 bis 5 Gew.-% vorhanden ist, wobei sich die Prozentangaben auf Gesamtgewicht der Zusammensetzung beziehen.

6. Verfahren zum Herstellen einer härtbaren Zusammensetzung nach Anspruch 1, **dadurch gekennzeichnet**, daß die härtbare Zusammensetzung im wesentlichen frei von Aminogruppen enthaltendem Material ist.

7. Verfahren zum Herstellen einer härtbaren Zusammensetzung nach Anspruch 1, **dadurch gekennzeichnet**, daß sie zusätzlich ein Acrylnitril-Butadiencopolymer enthält.

8. Verfahren zum Herstellen einer härtbaren Zusammensetzung nach Anspruch 1, **dadurch gekennzeichnet**, daß das nicht funktionelle Polydien 1,4-Polybutadien ist.

9. Verfahren zum Herstellen einer härtbaren Zusammensetzung nach Anspruch 1, **dadurch gekennzeichnet**, daß das Polyepoxid der Diglycidylether von Bisphenol A ist.

10. Verfahren zum Beschichten eines mit einem Primer versehenen Metallträgers durch Aufbringen der härtbaren Einpackungszusammensetzung, hergestellt nach jedem der Ansprüche 1 bis 9, auf den Metallträger und mindestens teilweises Härten der härtbaren Zusammensetzung.

11. Verwendung der härtbaren Einpackungszusammensetzung nach jedem der Ansprüche 1 bis 9 als Dichtungsmasse.

## Revendications

## Revendications pour les états contractant DE, FR, GB, IT, SE

1. Composition durcissable, comprenant

(a) un polydiène non fonctionnel,

(b) un polyépoxyde, et

(c) un système contenant du soufre, du disulfure et du zinc pour faire durcir par vulcanisation le polydiène et le polyépoxyde, caractérisée en ce qu'elle est une composition stable en un seul emballage, dans laquelle le système pour vulcanisation contient un alkyl (en $C_1$ à $C_{10}$) dithiocarbamate de zinc.

2. Composition durcissable selon la revendication 1, dans laquelle le polydiène est présent en une quantité allant de 10 % en poids à 80 % en poids ; le polyépoxyde est présent en une quantité allant de 4 % en poids à 35 % en poids ; et le système contenant du soufre pour une vulcanisation est présent en une quantité allant de 1 à 35 % en poids ; les pourcentages étant basés sur le poids total de la composition.

3. Composition durcissable selon la revendication 1, dans laquelle l'alkyl (en $C_1$ à $C_{10}$) dithiocarbamate de zinc est le diméthyl dithiocarbamate de zinc.

4. Composition durcissable selon la revendication 1, dans laquelle le disulfure est le disulfure de benzothiazyle.

5. Composition durcissable selon la revendication 2, dans laquelle le dithiocarbamate est présent en une quantité de 1 à 10 % en poids et le disulfure est présent en une quantité de 0,2 à 5 % en poids, les pourcentages étant basés sur le poids total de la composition.

6. Composition durcissable selon la revendication 1, dans laquelle la composition durcissable est essentiellement dépourvue d'une matière contenant des groupes amino.

7. Composition durcissable selon la revendication 1, comprenant en outre un copolymère d'acrylonitrile-butadiène.

8. Composition durcissable selon la revendication 1, dans laquelle le polydiène non fonctionnel est du poly(1,4-butadiène).

9. Composition durcissable selon la revendication 1, dans laquelle le polyépoxyde est l'éther diglycidylique du bisphénol A.

10. Procédé pour revêtir un substrat de métal apprêté, en appliquant audit substrat de métal la composition durcissable, en un seul emballage, selon chacune des revendications 1 à 9, et en provoquant le durcissement au moins partiel de la composition durcissable.

11. Utilisation, à titre de produit(s) pour scellement ou étanchéisation, de la composition durcissable, en un seul emballage, selon chacune des revendications 1 à 9.

## Revendications pour l'état contractant ES

1. Procédé de préparation d'une composition durcissable consistant à combiner :
   (a) un polydiène non fonctionnel,
   (b) un polyépoxyde, et
   (c) un système contenant du soufre, un disulfure et du zinc pour faire durcir par vulcanisation le polydiène et le polyépoxyde, caractérisé en ce que la composition est une composition stable en un seul emballage, dans laquelle le système pour vulcanisation contient un alkyl en ($C_1$ à $C_{10}$) dithiocarbamate de zinc.

2. Procédé de préparation d'une composition durcissable selon la revendication 1, dans lequel le polydiène est présent en une quantité allant de 10% en poids à 80% en poids ; le polyépoxyde est présent en un quantité allant de 4% en poids à 35% en poids ; et le système contenant du soufre pour une vulcanisation est présent en une quantité allant de 1 à 35% en poids ; les pourcentages étant basés sur le poids total de la composition.

3. Procédé de préparation d'une composition durcissable selon la revendication 1, dans lequel l'alkyl (en $C_1$ à $C_{10}$) dithiocarbamate de zinc est le diméthyl dithiocarbamate de zinc.

4. Procédé de préparation d'une composition durcissable selon la revendication 1, dans lequel le disulfure est le disulfure de benzothiazyle.

5. Procédé de préparation d'une composition durcissable selon la revendication 2, dans lequel le dithiocarbamate est présent en une quantité de 1 à 10% en poids et le disulfure est présent en une quantité de 0,2 à 5% en poids, les pourcentages étant basés sur le poids total de la composition.

6. Procédé de préparation d'une composition durcissable selon la revendication 1, dans lequel la composition durcissable est essentiellement dépourvue d'une matière contenant des groupes amino.

7. Procédé de préparation d'une composition durcissable selon la revendication 1, comprenant en outre un copolymère d'acrylonitrile-butadiène.

8. Procédé de préparation d'une composition durcissable selon la revendication 1, dans lequel le polydiène non fonctionnel est du poly(1,4-butadiène).

9. Procédé de préparation d'une composition durcissable selon la revendication 1, dans lequel le polyépoxyde est l'éther diglycidylique du bisphénol A.

10. Procédé pour revêtir un substrat de métal apprêté, en appliquant audit substrat de métal la composition durcissable, en un seul emballage, selon chacune des revendications 1 à 9, et en provoquant le durcissement au moins partiel de la composition durcissable.

11. Utilisation, à titre de produit(s) pour scellement ou étanchéisation, de la composition durcissable, en un seul emballage, selon chacune des revendications 1 à 9.